# EUROPÄISCHE PATENTSCHRIFT

(11) **EP 0 849 069 B1**
(45) Veröffentlichungstag und Bekanntmachung des Hinweises auf die Patenterteilung: **18.07.2001**
(21) Anmeldenummer: 97114365.6
(22) Anmeldetag: 20.08.1997
(51) Int. Cl.: B29D 31/50, B29D 31/508

(54) **Vorrichtung zur Herstellung von Sandalen**
Apparatus for making sandals
Dispositif pour la fabrication de sandales

(30) Priorität: 21.12.1996 DE 19653849
(43) Veröffentlichungstag der Anmeldung: 24.06.1998
(73) Patentinhaber: KLÖCKNER DESMA SCHUHMASCHINEN GmbH, 28832 Achim (DE)
(72) Erfinder: Strüssmann, Rolf, 27337 Blender/Intschede (DE)
(74) Vertreter: Röther, Peter, Dipl.-Phys.

(56) Entgegenhaltungen:
- EP-A- 0 325 948
- DE-A- 3 208 888
- FR-A- 2 130 739
- FR-A- 2 314 681
- GB-A- 2 234 934
- US-A- 3 474 477

## Beschreibung

Die Erfindung betrifft eine Vorrichtung zur Herstellung von Sandalen, bei der ein mit dem Sandalenschaft bezogener Leisten die obere Begrenzung eines durch Formseitenteile und gegebenenfalls einen Bodenstempel gebildeten Formhohlraums eines Spritzgießwerkzeugs zum Anformen einer Sohle an den Schaft darstellt, und die Oberkante der Formseitenteile mit der komplementären Leistenkontur eine Formhohlraum-Abdichtzone bildet, wobei im Bereich der Abdichtzone in den Leisten eine rundumverlaufende nach unten und seitlich offene Nut eingearbeitet ist, in der ein aus einem elastischem Material bestehender Dichtring angeordnet ist.

Derartige Vorrichtungen dienen dazu, Sohlen aus Kunststoff und/oder Gummi direkt an den auf den Leisten gezogenen Schaft anzuspritzen, sei es einlagig, mehrlagig, einfarbig oder mehrfarbig. Das von den Riemchen gebildete Sandalenoberteil ist an eine Brandsohle aus Stoff oder Leder angenäht.

Eine derartige Vorrichtung ist aus der US-A-3 474 477 bekannt.

Auch mit dieser Vorrichtung sollen Sandalen hergestellt werden bzw. an einen Sandalenschaft eine Laufsohle angeformt werden. Hierzu wird der aus Riemen bestehende Schaft auf einen Leisten gezogen, wobei der Leisten als obere Begrenzung der Sohlen-Formkavität dient. Um diesen Formhohlraum trotz der überstehenden Riemen hinreichend dicht zu machen, werden die Riemen mit Dichtlippen (55) derart in den aus elastischem Material bestehenden Dichtring gepresst, daß eine einigermaßen in sich geschlossene Dichtkante entsteht, besonders dort, wo sich die Zwischenräume zwischen den Riemen befinden.

Der entscheidende Nachteil bei dieser vorbekannten Vorrichtung ist jedoch darin zu sehen, daß die Dichtlippen (55) aufgrund der hohen Einspritzdrücke für das Sohlenmaterial mit relativ hohem Druck gegen die Riemen gedrückt werden müssen, wobei in den Bereichen zwischen den Riemen trotzdem noch die Gefahr besteht, daß plastifizierte Masse austreten kann.

Ein weiterer Nachteil der bekannten Vorrichtung ist in der Ausgestaltung der den Dichtring aufnehmenden Nut zu sehen. Um beim Anpressen der Dichtlippen (55) auf den Dichtring ein Herausrutschen desselben aus der Nut zu verhindern, ist der Verlauf von oberer Nutbegrenzung und seitlicher Nutbegrenzung spitzwinklig ausgestaltet, was die Herstellung der Nut im Leisten erschwert.

Mit den gleichen Nachteilen wie im vorbeschriebenen Stand der Technik ist eine aus der FR-A-2 130 739 bekannte Vorrichtung behaftet.

Der Erfindung liegt daher die Aufgabe zugrunde, eine Vorrichtung der eingangs genannten Art so auszubilden, daß diese Nachteile beseitigt werden, und daß unabhängig vom jeweiligen Sandalenmodell und von der Schuhgröße ohne das Erfordernis zusätzlicher Zwischenlagen eine sichere Dichtigkeit in den kritischen Zonen erreicht wird.

Die Erfindung löst diese Aufgabe gemäß dem kennzeichnenden Teil des Anspruchs 1 dadurch, daß die Nut im Querschnitt rechtwinklig und der Dichtring im Querschnitt in etwa U-förmig ausgebildet ist, wobei ein U-Schenkel an der senkrechten Nutwand anliegt, der benachbarte, eine Dichtlippe bildende U-Schenkel im unbelasteten Zustand seitlich über die Leistenkontur hinausragt und die Öffnung des U zur waagerechten Nutwand weist.

Die zur Aufnahme des Dichtungselements dienende Nut ist somit nach unten offen, so daß das Dichtelement problemlos eingelegt werden kann. Dadurch, daß die Öffnung des U zur waagerechten Nutwand weist, ist das Aufziehen des Schaftes auf den Leisten ohne Probleme möglich. An den Stellen, an denen die Riemchen des Schaftes am Leisten anliegen, wird die Dichtlippe ganz in die Nut zurückgedrückt, so daß sich hier eine ebene Fläche ergibt, während in den Zwischenräumen zwischen den Riemchen die Dichtlippe mit Vorspannung weiterhin über die Oberfläche des Leistens hinausragt. Werden nun die Seitenformteile geschlossen, legen sich deren Dichtkanten auf die ebene Riemchenoberfläche an, während die Dichtlippe mit den Dichtkanten den Formhohlraum schließt.

Somit kann ein und derselbe Leisten für unterschiedliche Sandalenmodelle gleicher Größe verwendet werden, ohne daß vor jedem Spritzzyklus aufwendige Vorarbeiten in Form von Einlegen von zusätzlichen Textil- oder Lederstreifen erforderlich sind.

Die Elastizität der Dichtung am Leisten führt dazu, daß zum einen die Riemchen des Sandalenschaftes auch im Bereich der Dichtung der Kontur des Leistens folgen, indem hier die Dichtung in die Nut gedrückt wird, während zwischen den Riemchen die Dichtung über die äußeren Riemchenebenen vorsteht.

Außerdem ist es durch diese Abdichtungsart möglich, die Dichtkante ganz in den Bereich der oberen Sohlenkante auch bei aufgesetztem nicht eingetauchtem Leisten zu verlegen. Somit können auch austriebsfreie Sandalen gefertigt werden, ohne den Einsatz von abdichtenden Überbrückungsstreifen, die nachteilige Unebenheiten oder Vertiefungen auf der Oberfläche verursachen. Nachträglich können normale und orthopädische Einlegesohlen problemlos eingelegt werden, was mittels der herkömmlichen Methoden nicht möglich ist, denn bei diesen müssen entsprechende Fußbetten gleich mitgeformt oder teilweise unterfüttert werden.

Vorzugsweise verwendet man als Dichtring einen solchen aus synthetischem Kautschuk, der zum einen die erforderliche Elastizität aufweist und zum anderen verschleißfest ist. Daher braucht ein derartiger Dichtring auch lediglich in größeren Zeiträumen gewechselt zu werden. Ein weiterer Vorteil bei der erfindungsgemäßen Vorrichtung liegt darin, daß auch bereits vorhandene Leisten schnell und einfach mit der erfindungsgemäßen Dichtung versehen werden können, die darüber hinaus auch zur Herstellung normaler Schuhe weiterverwendet werden können.

Die Erfindung wird im folgenden anhand von Zeichnungen dargestellt und näher erläutert.

Es zeigen:
- Fig. 1:: eine Vorrichtung zur Herstellung von Sandalen im Querschnitt,
- Fig. 2:: einen Ausschnitt der Vorrichtung gemäß Fig. 1 in Draufsicht.

In der Zeichnung ist eine Vorrichtung zur Herstellung von Sandalen dargestellt und allgemein mit dem Bezugszeichen 1 versehen. Sie besteht im vorliegenden Fall aus zwei Seitenformteilen 2 und 3, von denen das Formseitenteil 2 in der Geschlossenstellung und das Formseitenteil 3 in der Öffnungsstellung dargestellt ist. Der Bereich zwischen den Seitenformteilen 2 und 3 wird durch einen vertikal verfahrbaren Bodenstempel 4 geschlossen.

Die Oberkanten 5 der Formseitenteile 2 und 3 springen nach innen vor und dienen als Dichtkanten, die sich gegen Dichtflächen anlegen, die an einem Leisten 7 vorgesehen sind, der die obere Begrenzung des durch die Seitenformteile 2 und 3 und den Bodenstempel 4 gebildeten Formhohlraums 6 bildet. In den Formhohlraum 6 mündet ein nicht dargestellte Angußkanal, der beispielsweise in der Trennebene der Seitenformteile angeordnet ist. Über diesen Angußkanal wird Sohlenmaterial aus Kunststoff oder Gummi mittels eines ebenfalls nicht dargestellten Einspritzaggregats in den Formhohlraum 6 eingespritzt. Auf den Leisten 7 ist ein Sandalenschaft aufgezogen, der aus in der Zeichnung schematisch dargestellten Riemchen 8 und einer an diese Riemchen angenähten Stoffbrandsohle 9 besteht.

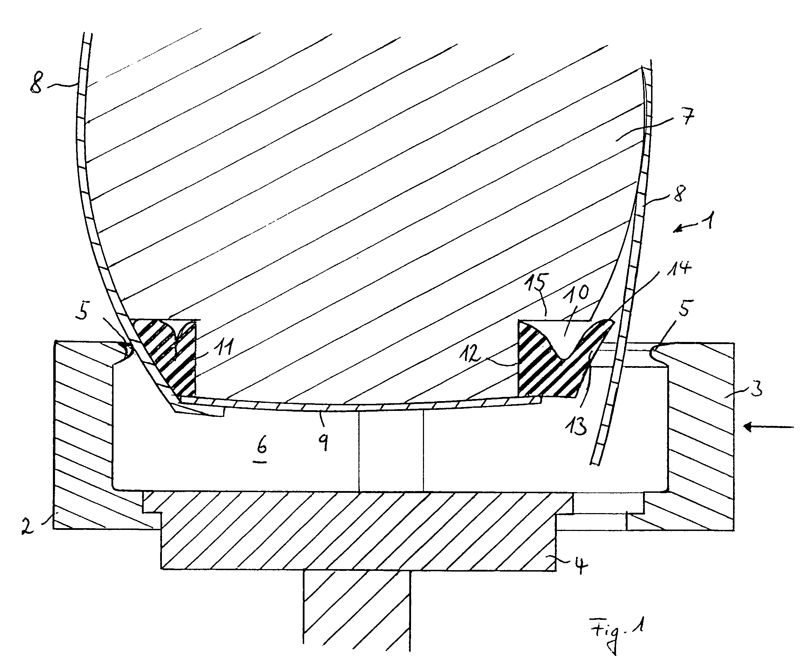

In der rechten Seite der Fig. 1 ist die Naht zwischen der Stoffbrandsohle 9 und dem Riemchen 8 zur Verdeutlichung der erfindungsgemäßen Vorrichtung aufgetrennt. In diesem Bereich des Leistens 7 ist rundum eine rechtwinklige Nut 10 in den Leisten 7 eingearbeitet. In diese Nut ist ebenfalls rundumlaufend ein Dichtring 11 eingelegt, der im Querschnitt in etwa U-förmig ausgebildet ist. Ein U-Schenkel 12 liegt an der vertikalen Wand der Nut 10 an, während (rechte Seite der Fig. 1) der benachbarte U-Schenkel 13 nach außen über die Leistenkontur vorsteht und eine Dichtlippe 14 bildet. Die Öffnung der U-förmigen Dichtung zeigt dabei zur waagerechten Wand 15 der Nut 10.

In der linken Hälfte der Fig. 1 ist der Zustand dargestellt, in dem sich das Seitenteil 2 in seiner Geschlossenstellung befindet. Dabei liegt die Dichtkante 5 des Formseitenteils 2 an der Oberfläche des der Kontur des Leistens 7 folgenden Riemchens 8 an und presst dabei den äußeren U-Schenkel 13 der Dichtung 11 in die Nut 10 hinein, während in den Bereichen zwischen den Riemchen 8 die Dichtlippe 14 von der Dichtkante 5 des Seitenteils 2 nur soweit in Richtung Nut zurückgedrückt wird, daß der Schlitz zwischen der Dichtkante 5 des Formseitenteils 2 und dem Leisten 7 durch die elastische Dichtung 11 sicher abgedichtet ist.

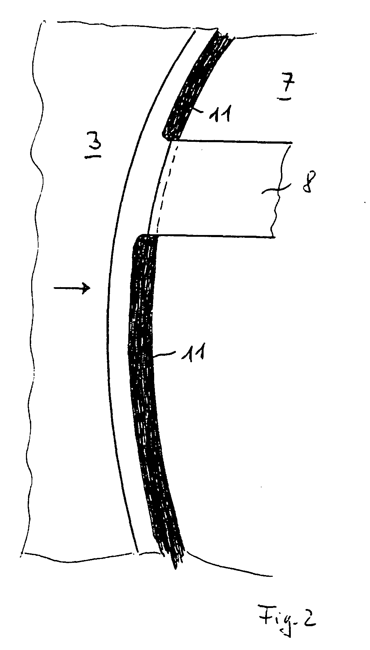

In der Fig. 2 ist der Zustand dargestellt, wie er sich aus der rechten Seite der Fig. 1 ergibt, wenn das Riemchen 8 an der Brandsohle angenäht ist. Das Riemchen 8 hat hier die Dichtung 11 vollständig in die Nut 10 zurückgedrückt, während in den Bereichen zwischen den Riemchen 8 die Dichtlippe 14 noch über die Randkontur des Leistens 7 hinausragt. Das Seitenformteil 3 befindet sich noch in der Offenstellung. Beim Zufahren des Seitenformteils 3 ergibt sich dann der oben beschriebene Zustand, wie er in der linken Seite der Fig. 1 dargestellt ist.

## Patentansprüche

1. Vorrichtung zur Herstellung von Sandalen, bei der ein mit dem Sandalenschaft bezogener Leisten (7) die obere Begrenzung eines durch Formseitenteile (2, 3) und gegebenenfalls einen Bodenstempel (4) gebildeten Formhohlraums (6) eines Spritzgießwerkzeugs zum Anformen einer Sohle an den Schaft darstellt, und die Oberkante (5) der Formseitenteile mit der komplementären Leistenkontur eine Formhohlraum-Abdichtzone bildet, wobei im Bereich der Abdichtzone in den Leisten eine rundumverlaufende nach unten und seitlich offene Nut (10) eingearbeitet ist, in der ein aus elastischem Material bestehender Dichtring (11) angeordnet ist,
dadurch gekennzeichnet,
die Nut (10) im Querschnitt rechtwinklig und der Dichtring (11) im Querschnitt in etwa U-förmig ausgebildet ist, wobei ein U-Schenkel (12) an der senkrechten Nutwand anliegt, der benachbarte, eine Dichtlippe (14) bildende U-Schenkel (13) im unbelasteten Zustand seitlich über die Leistenkontur hinausragt und die Öffnung des U zur waagerechten Nutwand (15) weist.

2. Vorrichtung nach Anspruch 1
dadurch gekennzeichnet,
daß der Dichtring (11) aus synthetischem Kautschuk besteht.

## Claims

1. A device for manufacturing sandals, in which a last (7) onto which the sandal upper is drawn represents the upper limit of a mould cavity (6), formed by mould side parts (2, 3) and where appropriate a bottom die (4), of an injection moulding tool for moulding a sole onto the upper, and the upper edge (5) of the mould side parts forms with the complementary last contour a mould cavity sealing zone, with a peripheral downwardly and laterally open groove (10) being incorporated into the last in the region of the sealing zone and there being arranged in this groove (10) a sealing ring (11) made of resilient material, characterised in that the groove (10) is constructed to be right-angled in cross-section and the sealing ring (11) is constructed to be approximately U-shaped in cross-section, with one limb of the U (12) bearing against the perpendicular groove wall, the adjacent limb of the U (13) forming a sealing lip (14) and projecting, in the unloaded state, laterally beyond the last contour, and the opening of the U pointing towards the horizontal groove wall (15).

2. A device according to Claim 1, characterised in that the sealing ring (11) is made of synthetic rubber.

## Revendications

1. Dispositif de fabrication de sandales, dans lequel une forme (7) recouverte de la tige de sandale, constitue la délimitation supérieure d'une cavité de moulage (6) d'un outil de moulage par injection, formée par des parties latérales de moulage (2, 3) et éventuellement un poinçon inférieur (4), pour le formage d'une semelle sur la tige, et le bord supérieur (5) des parties latérales de moulage forme une zone d'étanchéité de la cavité de moulage, avec le contour complémentaire de la forme, tandis qu'une rainure (10) périphérique, ouverte vers le bas et latéralement, dans laquelle est disposée une bague d'étanchéité (11) faite d'une matière élastique, est pratiquée dans les formes, dans la région de la zone d'étanchéité,
caractérisé
en ce que la section de la rainure (10) est rectangulaire et la section de la bague d'étanchéité (11) est approximativement en forme de U, une branche (12) du U s'appliquant contre la paroi verticale de la rainure, tandis que la branche (13) voisine du U, qui forme une lèvre d'étanchéité (14), dépasse latéralement du contour de la forme, à l'état non sollicité, et l'ouverture du U est dirigée vers la paroi horizontale (15) de la rainure.

2. Dispositif selon la revendication 1,
caractérisé
en ce que la bague d'étanchéité (11) est en caoutchouc synthétique.
